(19) Europäisches Patentamt
European Patent Office
Office européen des brevets

(11) Veröffentlichungsnummer: **0 019 111**
**A1**

(12) **EUROPÄISCHE PATENTANMELDUNG**

(21) Anmeldenummer: 80102178.3

(22) Anmeldetag: 23.04.80

(51) Int. Cl.³: C 07 F 9/40
C 07 F 9/32, C 08 K 5/53

(30) Priorität: 05.05.79 DE 2918161

(43) Veröffentlichungstag der Anmeldung: 26.11.80 Patentblatt 80/24

(84) Benannte Vertragsstaaten: BE CH DE FR GB LI

(71) Anmelder: BAYER AG
Zentralbereich Patente, Marken und Lizenzen
D-5090 Leverkusen 1, Bayerwerk(DE)

(72) Erfinder: Block, Hans-Dieter, Dr.
Roggendorfstrasse 65
D-5000 Köln 80(DE)

(72) Erfinder: Schwochow, Friedrich, Dr.
Am Telegraf 14
D-5090 Leverkusen(DE)

(72) Erfinder: Schliebs, Reinhard, Dr.
Roggendorfstrasse 63
D-5000 Köln 80(DE)

(54) **Phosphonomaleinsäureester, Verfahren zu ihrer Herstellung und ihre Verwendung.**

(57) Die vorliegende Erfindung betrifft Phosphonomaleinsäureester der allgemeinen Formel

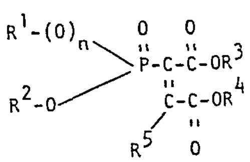

wobei

| | |
|---|---|
| $R^1$ | für einen gegebenenfalls substituierten Alkylrest mit 1-16 C-Atomen und - falls n = o - auch für einen gegebenenfalls substituierten Arylrest, |
| $R^2$, $R^3$, $R^4$ | unabhängig voneinander für einen gegebenenfalls substituierten Alkylrest mit 1-16 C-Atomen, |
| $R^5$ | für Wasserstoff, einen Alkyl- oder Arylrest mit 1- 7 C-Atomen und |
| n | für 0 oder 1 steht |

sowie ein Verfahren zu deren Herstellung.

EP 0 019 111 A1

Croydon Printing Company Ltd.

BAYER AKTIENGESELLSCHAFT 5090 Leverkusen, Bayerwerk
Zentralbereich Br/AB/Kü
Patente, Marken und Lizenzen

BEZEICHNUNG GEÄNDERT
siehe Titelseite

Phosphonomaleinsäureester sowie Verfahren zu deren Herstellung

Die vorliegende Erfindung betrifft Phosphonomaleinsäureester der allgemeinen Formel

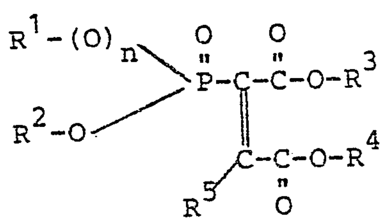

(I)

worin

$R^1$ für einen gegebenenfalls substituierten Alkylrest mit 1-16 C-Atomen und, falls n = o, auch für einen gegebenenfalls substituierten Arylrest,

$R^2$, $R^3$, $R^4$ unabhängig voneinander für einen gegebenenfalls substituierten Alkylrest mit 1-16 C-Atomen

$R^5$ für Wasserstoff oder für einen Alkyl- oder Arylrest mit 1- 7 C-Atomen und

n für die Zahlen O oder 1 steht.

Ferner betrifft die vorliegende Erfindung ein Verfahren zur Herstellung der Phosphonomaleinsäureester der allgemeinen Formel I, welches dadurch gekennzeichnet ist, daß 1-Halogen-1-phosphonobernsteinsäureester der Formel

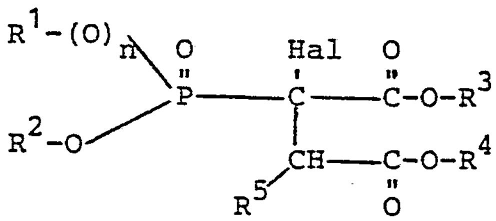

(II)

worin

Hal für Fluor, Chlor oder Brom,

$R^1$ für einen gegebenenfalls substituierten Alkylrest mit 1-16 C-Atomen und, falls n = O, auch für einen gegebenenfalls substituierten Arylrest,

$R^2$, $R^3$, $R^4$ unabhängig voneinander für eine Alkylrest mit 1-16 C-Atomen

$R^5$ vorzugsweise für Wasserstoff sowie für einen Alkyl- oder Arylrest und

n für die Zahlen 0 oder 1 steht,

mit Basen umgesetzt werden.

Die Phosphonomaleinsäureester sind hochreaktive Monomere, die zu einer großen Zahl von Reaktionen befähigt sind, unter denen wegen der im Molekül vorhandenen Doppelbindung die Additionsreaktionen eine herausragende Stellung einnehmen. Sie sind geeignet zur Synthese von Wirkstoffen wie z.B. Sequestriermitteln, Korrosionsschutzmitteln, Stabilisatoren, Flammschutzmitteln, Pharmaceutica und Pestiziden. Entsprechende Mittel sind z.B. in US-PS 3579570, US-PS 3933 944 oder DE-OS 2819112 beschrieben. Von besonderem Interesse sind neben den Verbindungen, in denen $R^1$ bis $R^4$ für Methyl steht, insbesondere auch solche Verbindungen mit höheren Resten; also von $C_2$ bis $C_{12}$, wobei die einzelnen Substituenten gleich und auch verschieden sein können.

Die erfindungsgemäße Methode zur Herstellung von Phosphonomaleinsäureestern ist insofern überraschend, als bislang nur aus 2-Chlor- oder 2-Bromalkanphosphonsäureestern, nicht jedoch aus 1-Brom- oder 1-Chloralkanphosphonsäureestern, wie sie in den 1-Halogen-1-phosphonobersteinsäureestern - nachfolgend als 1-Halogenphosphonobernsteinsäureester abgekürzt - vorliegen, mit Basen ungesättigte Phosphonsäureester hergestellt

werden konnten. Auch aus 1,2-Dibrom- oder 1,2-Dichloralkanphosphonsäureestern wird mit Basen immer nur das ß-ständige Halogenatom als Halogenwasserstoff abgespalten, aber nie das α-Halogenatom.

Ausgangsmaterialien für die erfindungsgemäße Darstellung der Phosphonomaleinester der Formel I sind die 1-Halogenphosphonobernsteinsäureester der Formel II, die ihrerseits leicht durch Halogenierung von Phosphonobernsteinsäureestern der Formel

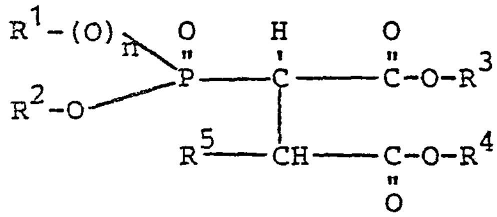

(III)

worin

$R^1$, $R^2$, $R^3$, $R^4$, $R^5$, n die gleiche Bedeutung wie in Formel I haben, dargestellt werden können. Die Halogenierung kann mit Hypohalogeniten sowie mit den elementaren Halogenen Chlor und Brom, mit Interhalogenverbindungen, mit Halogen-abgebenden Stoffen z.B. elementares Halogen enthaltenden Käfigverbindungen, in Gegenwart von Halogenwasserstoff-Akzeptoren gegebenenfalls in Gegenwart von Lösungsmitteln und gegebenenfalls bei Anwesenheit eines Puffersystems ausgeführt werden.

Für die Herstellung der in das erfindungsgemäße Verfahren einzusetzenden 1-Halogen-phosphonobernsteinsäureester geeignete Phosphonobernsteinsäureester sind z.B.:

Dimethoxyphosphonobernsteinsäuredimethylester
Diäthoxyphosphonobernsteinsäurediäthylester
Di-n-butoxyphosphonobernsteinsäure-di-n-butylester
Di-i-butoxyphosphonobernsteinsäure-di-i-butylester
Di-sek-butoxyphosphonobernsteinsäure-di-sek-butylester
Di-2-äthylhexylphosphonobernsteinsäure-di-2-äthylhexylester
Di-dodecyloxyphosphonobernsteinsäure-di-dodecylester
Diäthoxyphosphonobernsteinsäure-di-butylester
Dimethoxyphosphonobernsteinsäure-di-2-butoxyäthylester
Dimethoxyphosphonobernsteinsäure-di-cyclohexylester
Dimethoxyphosphonobernsteinsäure-bis-triäthylenglykolester
Dimethoxyphosphonobernsteinsäure-bis-2-chloräthylester
Bis-2-äthoxyäthoxyphosphonobernsteinsäuredimethylester
Methyl-methoxyphosphonobernsteinsäuredimethylester
Methyl-äthoxyphosphonobernsteinsäurediäthylester
Äthyl-methoxyphosphonobernsteinsäuredimethylester
Phenyl-methoxyphosphonobernsteinsäuredimethylester
Dimethylphosphonobernsteinsäuredimethylester
2-Methyl-1-dimethoxyphosphonobernsteinsäuredimethylester

bzw. deren Mischester, wie sie sich zumeist spontan und freiwillig durch Umesterung aus Phosphonobernsteinsäureestern mit unterschiedlichen Alkoxyresten im Molekül bilden.

Die Benennung der voranstehend als Beispiele aufgeführten Phosphonobernsteinsäureester und der anschließend als Beispiele genannten 1-Halogenphosphonobernsteinsäureester ist in der Weise vorgenommen worden, daß

die an die Gruppe P=O (Phosphonogruppe) gebundenen Alkoxy- oder Alkylreste der Phosphonogruppe als Präfixe vorangestellt sind, während die an die Carboxylgruppen als Ester gebundenen Alkohole dem Säurenamen nachgestellt sind.

Die Phosphonobernsteinsäureester sind nach bekannten Methoden gut zugängliche Substanzen, die z.T. bereits technisch hergestellt werden (vgl. z.B. Journal of General Chemistry of the USSR, 24, S 121-124 (1954)). Ihre Herstellung erfolgt durch Addition von Dialkylphosphiten oder Alkylphosphoniten an Malein- oder Fumarsäureester oder auch durch Veresterung von Phosphonobernsteinsäureteilestern, wie sie beispielsweise bei der Umsetzung von Trialkylphosphiten oder Dialkylphosphoniten mitFumarsäure oder Maleinsäuren entstehen, oder auch durch Umsetzung von Trialkylphosphiten oder Dialkylphosphoniten mit Malein- oder Fumarsäuremonoalkylestern.

Für das erfindungsgemäße Verfahren geeignete 1-Halogenphosphonobernsteinsäureester sind z.B.:

1-Chlor-dimethoxyphosphonobernsteinsäuredimethylester
1-Chlor-diäthoxyphosphonobernsteinsäurediäthylester
1-Chlor-di-n-butoxyphosphonobernsteinsäure-di-n-butylester
1-Chlor-di-i-butoxyphosphonobernsteinsäure-di-i-butylester
1-Chlor-di-sek-butoxyphosphonobernsteinsäure-di-sek-butylester
1-Chlor-di-2-äthylhexylphosphonobernsteinsäure-di-2-äthylhexylester
1-Chlor-di-dodecyloxyphosphonobernsteinsäure-di-dodecylester



BAD ORIGINAL

1-Chlor-diäthoxyphosphonobernsteinsäuredi-butylester
1-Chlor-dimethoxyphosphonobernsteinsäuredi-2-butoxyäthylester
1-Chlor-dimethoxyphosphonobernsteinsäuredi-cyclohexylester
1-Chlor-dimethoxyphosphonobernsteinsäurebis-triäthylen glykolester
1-Chlor-dimethoxyphosphonobernsteinsäure-bis-2-chloräthylester
1-Chlor-bis-2-äthoxyäthoxy-phosphonobernsteinsäuredimethylester
1-Chlor-methyl-methoxyphosphonobernsteinsäuredimethylester
1-Chlor-methyl-äthoxyphosphonobernsteinsäurediäthylester
1-Chlor-äthyl-methoxyphosphonobernsteinsäuredimethylester
1-Chlor-phenyl-methoxyphosphonobernsteinsäuredimethylester
1-Chlor-dimethylphosphonobernsteinsäuredimethylester
1-Brom-dimethoxyphosphonobernsteinsäuredimethylester
1-Brom-diäthoxyphosphonobernsteinsäurediäthylester
1-Brom-methyl-methoxyphosphonobernsteinsäuredimethylester
1-Fluor-dimethoxyphosphonobernsteinsäuredimethylester
1-Chlor-2-methyl-1-dimethoxyphosphonobernsteinsäuredimethylester

bzw. deren Mischester, wie sie sich zumeist spontan und freiwillig durch Umesterung aus Phosphonobernsteinsäureestern mit unterschiedlichen Alkoxyresten im Molekül bilden.

Für die Umwandlung der Halogenphosphonobernsteinsäureester in Phosphonomaleinsäureester ge-



BAD ORIGINAL

eignete Basen gehören sowohl der Gruppe basisch wirkender Stickstoff-Verbindungen und Phosphor-Verbindungen wie auch der Klasse ionisch aufgebauter Verbindungen mit basisch wirkendem Anion an.

Geeignete basische Stickstoffverbindungen sind z.B. Amine, z.B. Trialkylamine, Arylamine, Alkylarylamine und zugehörige Polyamine und gesättigte und ungesättigte fünf-, sechs- und sieben-gliedrige Stickstoff-Heterocyclen sowie Amide und Nitrile. Geeignete basische Phosphorverbindungen sind z.B. Trialkylphosphine, Hydroxylalkylphosphine, Trialkylphosphite, Alkylarylphosphite, Alkylphosphonite, Alkylphosphinite.

Geeignete ionisch aufgebaute Stoffe mit basisch wirkenden Anionen umfassen z.B. Hydroxide, Oxide, Amide, Alkoholate, Phenolate, Carbonate, Hydrogencarbonate, Phosphate, Hydrogenphosphate, Monoalkylphosphate, Phosphite, Polyphosphate, Metaphosphate, Phosphonate, Silikate, Hydroxy- und Oxokomplexe der Metalle wie Zinkate, Aluminate, Stannate, vorzugsweise in Form ihrer Alkali-, Erdalkali- und Ammonium-Salze sowie weiterhin die Salze von Carbonsäuren, z.B. Fettsäuren, Polycarbonsäuren, Aminocarbonsäuren, Hydroxycarbonsäuren, Phosphonocarbonsäuren. Es können auch Gemische verschiedener Basen eingesetzt werden und die Wirkung der Basen kann auch durch Zusatz puffernd wirkender Stoffe modifiziert werden.

Die verwendete Base, der umzusetzende 1-Halogenphosphonobernsteinsäureester und die sonstigen Reaktionsbedingungen müssen für ein optimales Reaktionsergebnis

aufeinander abgestimmt werden, so daß insbesondere die Entalkylierung des 1-Halogenphosphonobernsteinsäureesters und des daraus gebildeten Phosphonomaleinsäureesters durch die Base und durch das Basenhydrohalogenid bzw. durch das aus Base und abgespaltenen Halogenwasserstoff gebildete Halogenid hintangehalten wird.

1-Halogenphosphonobernsteinsäureester und Base werden vorzugsweise im Molverhältnis von ca. 1:1 eingesetzt. Gewünschtenfalls kann auch mit einem Überschuß Base gearbeitet werden, während ein Unterschuß Base unvollständige Reaktion zur Folge hat. Größere Abweichungen vom Molverhältnis 1:1 bieten im allgemeinen keine Vorteile.

Selbstverständlich ist es auch möglich, die Halogenierung des Phosphonobernsteinsäureesters der Formel III zum 1-Halogenphosphonobernsteinsäureester der Formel II und die Umwandlung des 1-Halogenphosphonobernsteinsäureesters der Formel II in den Phosphonomaleinsäureester der Formel I als Eintopfreaktion auszuführen, wobei der Halogenwasserstoff-Akzeptor der erstgenannten Reaktion und die Base der letztgenannten Reaktion gleich oder verschieden sein können und die beiden Reaktionsschritte sowohl zeitlich nebeneinander wie auch zeitlich nacheinander ablaufen können.

Das erfindungsgemäße Verfahren kann in Gegenwart oder in Abwesenheit von Lösungsmitteln ausgeführt werden. Da-

BAD ORIGINAL

bei können sowohl einphasige flüssige wie auch zweiphasige flüssige Systeme mit oder ohne feste Phase auftreten. Das Lösungsmittel kann auch mit der verwendeten Base identisch sein. Zu den verwendbaren Lösungsmitteln gehören beispielsweise Wasser, Alkohole, Äther, Kohlenwasserstoffe und Chlorkohlenwasserstoffe, Säureamide und Nitrile. Bei Verwendung von Alkoholen als Lösungsmittel sowie besonders von Alkoholaten als Basen in Alkoholen als Lösungsmittel ist es bevorzugt, die Bestandteile Alkohol und Alkoholat auf die im umzusetzenden 1-Halogenphosphonobernsteinsäureester verestert enthaltenen Alkohole abzustimmen und möglichst gleich zu machen. Bei Arbeiten in zweiphasigen flüssigen Systemen können Phasentransfer-Katalysatoren zugesetzt werden.

Das erfindungsgemäße Verfahren kann in einem weiten Temperaturbereich von ca. -80°C bis ca. 150°C ausgeübt werden, bevorzugt ist ein Bereich von -10°C bis ca. 100°C.

Das erfindungsgemäße Verfahren kann sowohl kontinuierlich wie auch diskontinuierlich gestaltet werden. Bei der diskontinuierlichen Verfahrensweise wird vorzugsweise die Base dem vorgelegten 1-Halogenphosphonobernsteinsäureester hinzugefügt, jedoch ist es auch möglich, Base und 1-Halogenphosphonobernsteinsäureester gleichzeitig in den Reaktionsraum einzugeben und es ist auch möglich, 1-Halogenphosphonobernsteinsäureester zu vorgelegter Base hinzuzugeben. Das oder die Lösungsmittel können sowohl der Base wie dem 1-Halogenphosphonobernsteinsäureester wie auch beiden zugesetzt werden oder aber unabhängig dosiert werden.

Im allgemeinen wird das erfindungsgemäße Verfahren bei Normaldruck ausgeführt, doch kann auch unter erhöhtem oder vermindertem Druck gearbeitet werden, wobei ein erhöhter Druck wegen der dadurch verminderten Flüchtigkeit insbesondere der Basen und/oder der Lösungsmittel Vorteile bieten kann. Druckveränderungen können auch benutzt werden, um den Siedepunkt des Systems z.B. für eine Siedekühlung in einen optimalen Bereich zu verlagern.

Die Isolierung der nach dem erfindungsgemäßen Verfahren hergestellten Phosphonomaleinsäureester kann nach herkömmlichen Methoden erfolgen. Die Entfernung der Basenhydrohalogenide oder der aus den Basen entstandenen Halogenide kann z.B. durch Filtrieren, Zentrifugieren etc. oder durch Auswaschen mit Wasser oder wäßrigen Lösungen vorgenommen werden, oder der Phosphonomaleinsäureester selbst wird mit einem Lösungsmittel gegebenenfalls nach vorherigem Zusatz von Wasser extrahiert. Lösungsmittel und nicht umgesetzte Basen können vor oder nach Abtrennung des Basenhydrohalogenides bzw. des aus der Base entstandenen Halogenides z.B. durch Destillation ganz oder teilweise entfernt werden. Die erfindungsgemäß dargestellten Phosphonomaleinsäureesters können als Rohprodukt wie in Lösung weiter gereinigt werden durch Waschen mit Wasser oder wäßrigen Lösungen von Säuren

BAD ORIGINAL

oder Basen oder durch Kontaktieren mit Adsorbentien und nach Entfernen des Lösungsmittels gegebenenfalls auch durch Destillation.

Durch Alkali-katalysierte Addition von Dialkylphosphiten an die Dialkoxyphosphonomaleinsäuredialkylester entstehen Alkylester der 1,2-Diphosphonobernsteinsäure.

1,2-Diphosphonobernsteinsäureester sind vielseitig verwendbare Stoffe, die z.B. als Flammschutzmittel und Haftvermittler verwendet werden können und die wertvolle Ausgangsstoffe für die Synthese von mehrere Phosphonogruppen enthaltenden Wirkstoffen wie beispielsweise Sequestriermitteln, Korrosionsschutzmitteln, Flammschutzmitteln, Dispergiermitteln, Pharmaceutica und Pestiziden darstellen (vgl. z.B. US-PS 3 579 570, US-PS 3 933 944 oder DE-OS 28 19 112).

Die Erfindung wird durch die nachfolgenden Beispiele näher erläutert.

Beispiel 1

a) Herstellung von 1-Chlor-1-dimethoxyphosphonobernsteinsäuredimethylester

Zu 254 g Dimethoxyphosphonobernsteinsäuredimethylester in 500 ml Wasser werden bei 0°C im Verlauf von 5 Minuten 530 ml einer Bleichlauge-Lösung mit einem Gehalt von 86 g Aktiv-Chlor zugetropft. Aus der zunächst homogenen Reaktionslösung scheidet sich im Verlauf der Reaktion ein Teil des Produktes als zweite flüssige Phase ab. Nach Beendigung der Bleichlauge-Zugabe werden für die Sammlung des Produktes 500 ml Methylenchlorid zugesetzt, die organische Phase wird dann im Scheidetrichter abgetrennt und die wäßrige Phase noch dreimal mit je 200 ml Methylenchlorid extrahiert. Nach dem Einengen im Vakuum hinterbleiben 149 g Rückstand aus den vereinigten organischen Phasen. Der Anteil des 1-Chlor-1-dimethoxyphosphonobernsteinsäuredimethylesters im Rückstand beträgt 98,0 %.

b) Herstellung von 1-Brom-1-dimethoxyphosphonobernsteinsäuredimethylester

Zu 254 g Dimethoxyphosphonobernsteinsäuredimethylester in 1000 ml Methylenchlorid wird bei 0°C im Verlauf einer Stunde eine aus 190 g Brom, 88 g Natriumhydroxid und 450 ml Wasser hergestellte Natriumhypobromit-Lösung zugetropft. Die Reaktionsmischung wird intensiv gerührt und von außen gekühlt. Nach Beendigung



BAD ORIGINAL

der Hypobromit-Zugabe wird die Reaktionsmischung in einen Scheidetrichter überführt. Die spezifisch schwerere Methylenchlorid-Phase wird abgenommen und die verbleibende wäßrige Lösung noch einmal mit 300 ml Methylenchlorid extrahiert. Die vereinigten organischen Phasen werden eingeengt und der Rückstand wird dann bei 100°C im Vakuum an der Wasserstrahlpumpe (14 Torr) von flüchtigen Anteilen befreit. Der Rückstand, der nach dieser Behandlung 302 g wiegt, besteht nach gaschromatographischer Analyse aus 94,8 % 1-Brom-1-dimethoxyphosphonobernsteinsäuredimethylester und 2,9 % Dimethoxyphosphonobernsteinsäuredimethylester. Beim Stehenlassen kristallisiert der 1-Brom-1-dimethoxyphosphonobernsteinsäuredimethylester zu farblosen nadeligen Kristallen hoher Reinheit.

c) Umsetzung von Produkt gemäß a)

Zu 288,5 g 1-Chlor-1-dimethoxyphosphonobernsteinsäuredimethylester (1,0 Mol) in 500 ml Toluol werden bei 20-25°C innerhalb einer Stunde 111 g Triethylamin (1,1 Mol) hinzugetropft. Nach weiteren 2 Stunden Rühren wird das ausgefallene Triethylammoniumchlorid abgesaugt und mit 250 ml Toluol ausgewaschen. Aus der Lösung wird Toluol im Vakuum bei 14 Torr abgezogen. Der Rückstand wiegt 249 g. Bei der anschließenden Destillation werden 123 g Destillat ($Kp_1$: 137°C) und 100 g undestillierbarer Sumpf erhalten. Das Destillat enthält nach gaschromatographischer Analyse 98,2 % des erwünschten Dimethoxyphosphonomaleinsäureesters. Die $^1$H-NMR-Untersuchung zeigt, daß 88 %



BAD ORIGINAL

des Produktes in der cis-Form (Phosphonomaleinsäure-Form) und 12 % des Produktes in der trans-Form (Phosphonofumarsäure-Form) vorliegen.

Nochmalige Destillation im Vakuum liefert ein hochreines, über 99 %iges Produkt.

d) Umsetzung von Produkt gemäß b)

Zu 167 g 1-Brom-1-dimethoxyphosphonobernsteinsäuredimethylester (0,5 Mol) in 300 ml Toluol werden bei 20-25°C im Verlauf einer halben Stunde 51 g Triethylamin (0,5 Mol) hinzugetropft. Nach weiteren 50 Minuten Rühren wird das ausgefallene Triethylammoniumbromid abgesaugt und mit 200 ml Toluol ausgewaschen. Toluol wird bei reduziertem Druck (bis 80°C/2 Torr) aus der Lösung abdestilliert. Der Rückstand wiegt 122 g. Schonende Destillation durch langsames Eintropfen dieses Rückstandes in den erhitzten Kolben einer Vakuumdestillationsapparatur ergibt 84 g Dimethoxyphosphonomaleinsäuredimethylester.

Beispiel 2

a)

Zu 254 g Dimethoxyphosphonobernsteinsäuredimethylester (1,0 Mol) in 1000 ml Methylenchlorid werden bei 0°C im Verlaufe von 4 Minuten 530 ml einer Bleichlauge-Lösung mit einem Gehalt von 86 g (1,2 Mol) Aktiv-Chlor zugetropft. Die Reaktionsmischung wird intensiv gerührt und von außen gekühlt. Nach Beendigung der Bleichlauge-Zugabe wird die Reaktionsmischung in einen Scheidetrichter überführt. Die spezifisch



BAD ORIGINAL

schwerere Methylenchlorid-Phase wird abgenommen und die verbleibende wäßrige Lösung noch einmal mit 100 ml Methylenchlorid extrahiert. Die vereinigten organischen Phasen werden eingeengt und der Rückstand wird dann bei 100°C im Vakuum an der Wasserstrahlpumpe (14 Torr) von flüchtigen Anteilen befreit. Der Rückstand, der nach dieser Behandlung 268 g wiegt, besteht nach gaschromatographischer Analyse aus 96,3 % 1-Chlor-1-dimethoxyphosphonobernsteinsäure-dimethylester und 2,6 % Dimethoxyphosphonobernsteinsäuredimethylester.

b)

Die Verfahrensweise von Beispiel 1 wird wiederholt mit der Abänderung, daß die Reaktion bei 40°C durchgeführt wird. Es werden 234 g roher 1-Chlor-1-dimethoxyphosphonobernsteinsäuredimethylester mit einer gaschromatographisch bestimmten Reinheit von 96,8 % erhalten.

c)

Die Verfahrensweise von Beispiel 1 wird wiederholt mit der Abänderung, daß nur 500 ml Methylenchlorid als Lösungsmittel eingesetzt werden. Es werden 249 g rohes 1-Chlor-1-dimethoxyphosphonobernsteinsäuredimethylester mit einer gaschromatographisch bestimmten Reinheit von 97,3 % erhalten.

d)

Zu 288,5 g 1-Chlor-1-dimethoxyphosphonobernsteinsäuredimethylester (1,0 Mol) in 600 ml Toluol werden bei 15 - 20°C im Verlauf einer Stunde 125 g DBN (2,3,4-6,7,8-Hexahydropyrrolo/¯1,2-a7-pyrimidin) (1,0 Mol)



BAD ORIGINAL

hinzugetropft. Nach weiteren 10 Minuten Rühren wird das ausgefallene Salz abgesaugt und mit 300 ml Toluol ausgewaschen. Toluol wird bei reduziertem Druck aus der Lösung bis 80°C/2 Torr abdestilliert. Der Rückstand wiegt 258 g, der Gehalt an Dimethoxyphosphonomaleinsäuredimethylester beträgt 94,6 %.

Beispiel 3

Zu 288,5 g 1-Chlor-1-dimethoxyphosphonobernsteinsäuredimethylester (1,0 Mol) in 600 ml Toluol werden bei 20-25°C im Verlauf von 1,5 Stunden 152 g DBU (2,3,4,6,7,8,9,10-Oktahydropyrimido[1,2-a]azepin) (1,0 Mol) hinzugetropft. Nach weiteren 30 Minuten Rühren wird das ausgefallene Salz abgesaugt und mit 300 ml Toluol ausgewaschen. Toluol wird bei reduziertem Druck aus der Lösung bis 80°C/2 Torr abdestilliert. Der Rückstand wiegt 261 g, nach gaschromatographischer Analyse besteht er aus 96,2 % reinem Dimethoxyphosphonomaleinsäuredimethylester.

Beispiel 4

Zu 288,5 g 1-Chlor-1-dimethoxyphosphonobernsteinsäuredimethylester (1,0 Mol) in 250 ml Methanol werden bei 25°C im Verlauf einer Stunde 232 ml 4,3 m methanolisches Natriummethylat (1,0 Mol) hinzugetropft. Das ausgefallene Natriumchlorid wird abgesaugt und mit 150 ml Methanol ausgewaschen. Methanol wird bei reduziertem Druck aus der Lösung bis 100°C/12 Torr



BAD ORIGINAL

abdestilliert. Der Rückstand wiegt 293 g. Durch Destillation im Vakuum werden daraus 251 g 99,8 %iger Dimethoxyphosphonomaleinsäuredimethylester erhalten.

Beispiel 5

Zu 288,5 g 1-Chlor-1-dimethoxyphosphonobernsteinsäuredimethylester (1,0 Mol) werden im Verlauf einer Stunde 2320 ml 0,43 m methanolisches Natriummethylat (1,0 Mol) hinzugetropft. Das ausgefallene Natriumchlorid wird abgesaugt und mit 150 ml Methanol ausgewaschen. Methanol wird zum größten Teil abdestilliert. Eine Nachfällung von Natriumchlorid wird abfiltriert. Das restliche Methanol wird im Vakuum abgezogen. Destillation im Vakuum ergibt 221 g Dimethoxyphosphonomaleinsäuredimethylester.

Beispiel 6

Zu 344,5 g 1-Chlor-1-diethoxyphosphonobernsteinsäurediethylester (1,0 Mol) - hergestellt aus Diethoxyphosphonobernsteinsäurediethylester und Bleichlauge in analoger Weise zu Beispiel 1 - in 500 ml Ethanol werden bei 25°C im Verlauf einer Stunde 520 ml 1,92 m ethanolisches Natriumethylat (1,0 Mol) hinzugetropft. Das ausgefallene Natriumchlorid wird abgesaugt und mit 150 ml Ethanol ausgewaschen. Ethanol wird bei reduziertem Druck aus der Lösung abdestilliert. Der Rückstand ergibt bei der Destillation im Vakuum 259 g Diethoxyphosphonomaleinsäurediethylester ($Kp_1$:169°C).

Beispiel 7

Zu 456,5 g 1-Chlor-1-di-i-butoxyphosphonobernsteinsäure-di-i-butylester (1,0 Mol) - hergestellt aus Di-i-butoxyphosphonobernsteinsäuredi-i-butylester und Bleichlauge in analoger Weise zu Beispiel 1 - in 1000 ml Toluol werden bei 20-25°C im Verlauf einer Stunde 152 g DBU (2,3,4,6,7,8,9,10-Oktahydropyrimido[1,2-a]-azepin) (1,0 Mol) hinzugetropft. Nach weiteren 60 Minuten Rühren wird das ausgefallene Salz abgesaugt und mit 500 ml Toluol ausgewaschen. Toluol wird bei reduziertem Druck aus der Lösung bis 120°C/2 Torr abdestilliert. Der Rückstand wiegt 423 g, nach gaschromatographischer Analyse besteht er aus 96,9 % reinem Di-i-butoxyphosphonomaleinsäuredi-i-butylester.

Beispiel 8

Zu 268 g einer Mischung von 1-Methyl-1-(dimethoxyphosphono)bernsteinsäuredimethylester (40 %) und 2-Methyl-1-dimethoxyphosphonobernsteinsäuredimethylester (60 % entsprechend 0,6 Mol) werden 64 g Natriumcarbonat (0,6 Mol) und 300 g Wasser hinzugefügt. In diese Mischung werden bei 20°C im Verlaufe einer halben Stunde 43 g Chlor (0,6 Mol) gasförmig eingeleitet. Die Reaktionsmischung wird intensiv gerührt und von außen gekühlt. Nach Beendigung der Chlor-Zugabe wird die Reaktionsmischung in einem Scheidetrichter dreimal mit je 200 ml Methylchlorid extrahiert. Die vereinigten organischen Phasen werden wie in Beispiel 1 beschrieben aufgearbeitet. Der Rückstand, der nach dieser Behandlung 205 g wiegt, besteht nach gaschromatographischer Analyse aus 58 % 1-Chlor-1-dimethoxyphosphono-2-methylbernsteinsäure-dimethylester und 42 % der isomeren Methyl-dimethoxyphosphonobernsteinsäuredimethylester.

104 g dieser Mischung, enthaltend ca. 62 g entsprechend 0,2 Mol 1-Chlor-1-dimethoxyphosphono-2-methylbernsteinsäuredimethylester, werden mit 200 ml Methanol vorgelegt. Bei 25°C werden im Verlauf einer halben Stunde 47 ml 4,3 m methanolisches Natriummethylat (0,2 Mol) zugetropft. Ausgefallenes Natriumchlorid wird abgesaugt, mit wenig Methanol gewaschen und die Lösung wird im Vakuum eingeengt. Der Rückstand wird destilliert. Das Destillat ($Kp_1$: 134-148°C) wiegt 84 g und besteht nach $^1$H-NMR-Analyse aus 54 % 1-Dimethoxyphosphono-2-methylmaleinsäuredimethylester und 46 % der isomeren Methyl-dimethoxyphosphonobernsteinsäuredimethylester, unter denen das 1-Methyl-1-phosphono-Isomere sehr stark überwiegt.

Beispiel 9

Zu 238 g Methyl-methoxyphosphonobernsteinsäuredimethylester (1,0 Mol) in 1000 ml Methylenchlorid werden bei 0°C im Verlaufe von 5 Minuten 530 ml einer Bleichlauge-Lösung mit einem Gehalt von 86 g (1,2 Mol) Aktiv-Chlor zugetropft. Die Reaktionsmischung wird intensiv gerührt und von außen gekühlt. Nach Beendigung der Bleichlauge-Zugabe wird die Reaktionsmischung in einen Scheidetrichter überführt. Die spezifisch schwerere Methylenchlorid-Phase wird abgenommen und die verbleibende wäßrige Lösung nochmals mit 300 ml Methylenchlorid extrahiert. Die vereinigten organischen Phasen werden eingeengt und der Rückstand wird dann bei 100°C im Vakuum an der Wasserstrahlpumpe (14 Torr) von flüchtigen Anteilen befreit. Der Rückstand, der nach dieser Behandlung 244 g wiegt, besteht nach gaschromatographischer Analyse aus 82 % 1-Chlor-1-(methyl-methoxyphosphono)-bernsteinsäuredimethylester und 13,2 % Methyl-methoxyphosphonobernsteinsäuredimethylester.

133 g dieser Mischung, enthaltend ca. 109 g entsprechend 0,4 Mol 1-Chlor-1-(methyl-methoxyphosphono)-bernsteinsäuredimethylester, werden mit 300 ml Methanol vorgelegt. Bei 25°C werden im Verlauf von 10 Minuten 94 ml 4,3 m methanolisches Natriummethylat (0,4 Mol) zugetropft. Ausgefallenes Natriumchlorid wird abgesaugt, mit Methanol ausgewaschen, und das Filtrat wird eingeengt. Die Destillation ergibt 103 g Produkt ($Kp_1$: 130-135°C), das nach gaschromatographischer Analyse aus 88,5 % 1-(Methyl-methoxyphosphono)-maleinsäuredimethylester und 10,6 % 1-(Methylmethoxyphosphono)-bernsteinsäuredimethylester besteht.

Beispiel 10

Zu 282 g Diethoxyphosphonobernsteinsäuredimethylester (1,0 Mol), hergestellt durch Addition von Diäthylphosphit an Maleinsäuredimethylester, in 800 ml Methylenchlorid werden bei 0°C im Verlaufe von



BAD ORIGINAL

5 Minuten 530 ml einer Bleichlauge-Lösung mit einem Gehalt von 86 g (1,2 Mol) Aktiv-Chlor zugetropft. Die Reaktionsmischung wird intensiv gerührt und von außen gekühlt. Nach Beendigung der Bleichlauge-Zugabe wird die Reaktionsmischung in einen Scheidetrichter überführt. Die spezifisch schwerere Methylenchlorid-Phase wird abgenommen und die verbleibende wäßrige Lösung noch zweimal mit je 300 ml Methylenchlorid extrahiert. Die vereinigten organischen Phasen werden eingeengt und der Rückstand wird dann bei 100°C im Vakuum an der Wasserstrahlpumpe (14 Torr) von flüchtigen Anteilen befreit. Der Rückstand, der nach dieser Behandlung 285 g wiegt, besteht nach gaschromatographischer Analyse aus 90,1 % 1-Chlor-1-phosphonobernsteinsäureester und 2,8 % Phosphonobernsteinsäureester. Aus dem Gaschromatogramm ist ersichtlich, daß statt des erwarteten einheitlichen 1-Chlor-1-diethoxyphosphonobernsteinsäuredimethylesters ein Gemisch von Produkten vorliegt, das durch Austausch der Methyl- und Ethylester-Gruppen entstanden ist. Auch das $^{1}H$-NMR-Spektrum weist darauf hin, daß neben $C_2H_5$-O-P-Gruppen auch $CH_3$-O-P-Gruppen in nahezu gleicher molarer Menge vorhanden sind.

175 g dieses Produktes, enthaltend ca. 158 g 1-Chlor-1-phosphonobernsteinsäureester mit je 2 Methoxygruppen und 2 Ethoxygruppen im statistischen Mittel als Ester-

BAD ORIGINAL

gruppen pro Molekül - das entspricht ca. 0,5 Mol-werden mit 200 ml Methanol vorgelegt. Bei 20°C werden im Verlauf einer halben Stunde 140 ml methanolische Natriummethylat-Lösung (0,6 Mol) zugetropft. Danach wird das Reaktionsgemisch durch Abziehen des Methanols im Vakuum bei nicht mehr als 20°C eingedickt. 100 ml Wasser werden hinzugefügt, die Lösung mit Schwefelsäure neutral gestellt und sodann wird die Lösung dreimal mit 150 ml Methylenchlorid extrahiert. Die vereinigten organischen Extrakte werden eingeengt und der Rückstand wird destilliert. Das Destillat ($Kp_1$: 135-145°C) wiegt 111 g. Nach gaschromatographischer Analyse enthält es 78,7 % Dimethoxyphosphonomaleinsäuredimethylester sowie insgesamt 19,8 % leicht höher siedender Komponenten. Das $^1$H-NMR-Spektrum zeigt, daß Methoxygruppen und Ethoxygruppen im Verhältnis 88 : 12 im Destillat vorhanden sind. Daraus ergibt sich, daß es sich bei den höher siedenden Komponenten um gemischte Methyl-Ethyl-ester der Phosphonomaleinsäure handelt.

## Beispiel 11

Zu 288,5 g 1-Chlor-1-dimethoxyphosphonobernsteinsäure-dimethylester (1,0 Mol) werden bei 100°C rasch 250 g Trimethylphosphit (2,0 Mol) hinzugefügt. Diese Mischung wird 3 Stunden am Rückfluß sieden gelassen. Während dieser Zeit entweicht Methylchlorid, das durch Abkühlung kondensiert werden kann. Anschließend werden die flüchtigen Teile im Vakuum bis 140°C/13 Torr abgezogen. Der flüchtige Anteil besteht im wesentlichen aus Di-

BAD ORIGINAL

methylphosphit und Trimethylphosphit. Der Rückstand wird einer Destillation im Vakuum bei 1 Torr unterworfen. Das Destillat ($Kp_1$: 136-138°C) aus Dimethoxyphosphonomaleinsäuredimethylester wiegt 86 g.

Beispiel 12

4,6 g Natrium (0,20 Mol) werden in 200 ml Toluol mit Hilfe eines Ultraturrax fein verteilt. Zu der Suspension werden bei 30 - 35°C 51 g Dimethoxyphosphonobernsteinsäuredimethylester (0,2 Mol) langsam zugetropft. In exothermer Reaktion entsteht eine klare, leicht gelbe Lösung von Dimethoxyphosphonobernsteinsäuredimethylester-Natriumsalz.

Zugabe dieser Lösung zu einer bei 25 - 30°C gehaltenen Lösung von 58 g 1-Chlor-1-dimethoxyphosphonobernsteinsäuredimethylester in 200 ml Toluol führt zu einer Natriumchlorid-Ausfällung. Nach Abfiltrieren des Salzes wird aus dem Filtrat das Toluol im Vakuum abgezogen. Der Rückstand liefert bei der Destillation 88 g Destillat, das nach $^1$H-NMR-spektroskopischer Untersuchung ein annähernd äquimolares Gemisch von Dimethoxyphosphonobernsteinsäuredimethylester und Dimethoxyphosphonomaleinsäuredimethylester darstellt.

Beispiel 13

252 g Dimethoxyphosphonomaleinsäuredimethylester (1,0 Mol) und 110 g Dimethylphosphit werden als Mischung vorgelegt. Bei 20 - 25°C werden tropfenweise insgesamt 10 ml einer 4,3 m Lösung von Natriummethylat in Methanol zugesetzt. Schon nach den ersten Tropfen beginnt eine deutlich exotherme Reaktion, so daß die weitere Zugabe vorsichtig immer dann erfolgt, wenn die exotherme Reaktion nachläßt. Nach Ende der erkennbaren Reaktion läßt man noch weitere 8 Stunden stehen und evakuiert dann unter Erwärmen auf 120°C bis 2 Torr. Der kristalline Rückstand wiegt 365 g. Der

Der Anteil des 1,2-Bis-dimethoxyphosphonobernsteinsäuredimethylesters an den flüchtigen Anteilen beträgt nach gaschromatographischer Analyse 95,5 %. Zweimaliges Umkristallisieren dieses Rückstandes aus Toluol ergibt ein Produkt (Fp. 75°C), das 1,2-Bis-dimethoxyphosphonobernsteinsäuredimethylester in über 99 %iger Reinheit darstellt.

Patentansprüche

1. Phosphonomaleinsäureester der allgemeinen Formel

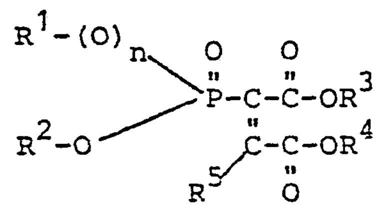

wobei

$R^1$ für einen gegebenenfalls substituierten Alkylrest mit 1-16 C-Atomen und - falls n = o - auch für einen gegebenenfalls substituierten Arylrest,

$R^2$,$R^3$,$R^4$ unabhängig voneinander für einen gegebenenfalls substituierten Alkylrest mit 1-16 C-Atomen,

$R^5$ für Wasserstoff, einen Alkyl- oder Arylrest mit 1- 7 C-Atomen und

n für O oder 1 steht.

2. Verfahren zur Herstellung von Phosphonomaleinsäureestern gemäß Anspruch 1, dadurch gekennzeichnet, daß 1-Halogen-1-phosphonobernsteinsäureester der allgemeinen Formel

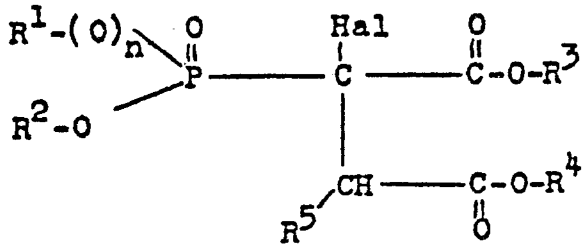

worin

| | |
|---|---|
| Hal | für Chlor oder Brom, |
| $R^1$ | für einen gegebenenfalls substituierten Alkylrest mit 1-16 C-Atomen und, falls n = o, auch für einen gegebenenfalls substituierten Arylrest, |
| $R^2, R^3, R^4$ | unabhängig voneinander für einen Alkylrest mit 1-16 C-Atomen, |
| $R^5$ | vorzugsweise für Wasserstoff sowie für einen Alkyl- oder Arylrest und |
| n | für die Zahlen 0 oder 1 steht, |

mit Basen umgesetzt werden.

3) Verwendung von Phosphonomaleinsäureestern gemäß Anspruch 1 als Flammschutzmittel.

4) Verwendung von Phosphonomaleinsäureestern gemäß Anspruch 1 als Haftvermittler.

0019111

European Patent Office

# EUROPEAN SEARCH REPORT

Application number

EP 80 10 2178.3

| Category | Citation of document with indication, where appropriate, of relevant passages | Relevant to claim | CLASSIFICATION OF THE APPLICATION (Int. Cl.3) |
|---|---|---|---|
| X | US - A - 3 562 166 (PROCTER & GAMBLE) * Spalte 6, Zeile 45 * -- | 1 | C 07 F 9/40<br>C 07 F 9/32<br>C 08 K 5/53 |
| X | Chemical Abstracts Band 77, Nr. 23, 4. Dezember 1972 Columbus, Ohio, USA R.K. HUFF et al. "Nonadrides. VI. Dimerization of the C-unit in vivo and in vitro" Seite 356, rechte Spalte, Abstract Nr. 151408e & J. Chem. Soc., Perkin Trans. 1, Nr. 20, 1972, Seiten 2584 bis 2590 (Eng) in Verbindung mit 9. collective Formel Register, Seite 5882 F, Spalte 3, Mitte ($C_{12}H_{21}O_7P$) -- | 1 | TECHNICAL FIELDS SEARCHED (Int.Cl.3)<br>C 07 F 9/32<br>C 07 F 9/40<br>C 08 K 5/53 |
| A | DE - A1 - 2 449 466 (HOECHST) -- | | |
| A | US - A - 4 024 207 (STE NATIONALE DES POUDRES ET EXPLOSIFS) -- | | |
| A | US - A - 3 584 124 (PROCTER & GAMBLE) ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 26-08-1980 | KAPTEYN |